# EUROPEAN PATENT SPECIFICATION

(11) **EP 3 272 483 B1**
(45) Date of publication and mention of the grant of the patent: **26.10.2022**
(21) Application number: 16767790.5
(22) Date of filing: 17.02.2016
(51) Int. Cl.: B28D 1/22, F16C 29/04, F16C 29/00

(54) **A MANUAL CERAMIC CUTTER INCLUDING A TOOL HOLDER AND A TOOL HOLDER GUIDE SYSTEM**
WERKZEUGHALTERFÜHRUNGSSYSTEM IN MANUELLEN KERAMIKSCHNEIDERN
SYSTÈME DE GUIDAGE DE PORTE-OUTILS DANS DES COUPE-CARREAUX MANUELS

(30) Priority: 20.03.2015 ES 201500223
(43) Date of publication of application: 24.01.2018
(73) Proprietor: Germans Boada, S.A., 08191 Rubi (Barcelona) (ES)
(72) Inventor: SOLER BALCELLS, Jordi, 08191 (Rubi) Barcelona (ES)
(74) Representative: Maldonado Jordan, Julia
(86) International application number: PCT/ES2016/070096
(87) International publication number: WO 2016/151161

(56) References cited:
- EP-A1- 0 568 852
- EP-A1- 2 712 717
- EP-A2- 1 010 907
- CN-U- 202 399 412
- CN-U- 202 428 561
- DE-A1-102012 101 773
- DE-A1-102013 103 193
- ES-U- 1 071 906
- JP-A- 2007 223 148
- US-A1- 2003 029 433

## Description

### Object of the invention

The object of the present invention is a manual ceramic cutter including a tool holder and a tool holder guide system that has characteristics intended to gently move the toolholder and increase resistance to the bending of the guides especially during the cutting and separating operations of the ceramic parts.

### Field of application of the invention

This invention is applicable to manual ceramic cutters.

### State of the art

Currently, manual ceramic cutters having a surface to support the ceramic part to be cut; guides that are parallel to each other and the aforementioned support surface of the ceramic part for the longitudinal movement of a toolholder that comprises a handle for the actuation thereof and that generally carries a cutting tool and a separating tool for the ceramic part scored by the cutting tool, are known in the market.

Currently, the use of two parallel cylindrical bars for guiding the toolholder, said toolholder having cylindrical holes for the through-mounting of said pair of guide bars, is known; however, the forces applied to the toolholder during the operations to cut or score the ceramic part and to separate the same causes the guides to bend and a subsequent loss of accuracy in the cut.

One solution intended to prevent this bending is described in the utility model ES 1071906 U of the same owner of the present invention, in which the cutter, in addition to the aforementioned guide system, consisting of passing the guide bars through the inside of longitudinal holes defined in the toolholder head, comprises lateral extensions in the head, the ends of which are coupled and can be longitudinally moved in first non-bending guides secured to end supports of the base of the cutter.

Although this solution is effective in preventing the guide bars from bending, it entails greater constructive complexity since it practically includes two parallel guide systems, one formed by guide bars and the other formed by non-bending bars, which also increases friction in the movement of the toolholder head.

The owner of the present invention is not aware of the existence of prior art that solves the problem posed in what relates to the bending of the moving guides of the toolholder and the reduction of friction between said elements.

Document DE 102012101773 A1 discloses a manual ceramic cutter having a guide system for the longitudinal movement of a toolholder, wherein the toolholder comprises a handle for the actuation thereof and a cutting tool for scoring a ceramic part, and wherein the guide system comprises parallel guides located at the sides of the toolholder, with each guide being formed by a profile. The toolholder comprises, at each side thereof, two end bearings and one intermediate bearing which come in contact with the guide corresponding to the same side.

Document EP1010907A2 discloses a linear guide system comprising a profile made of aluminium and a bearing carriage with two end bearings and one intermediate bearing coming in contact with the guide, wherein the guide comprises upper and lower steel rods, disposed longitudinally, forming races for the bearing carriage, and in each bearing carriage, the two end bearings are disposed at the same height and come in contact with the lower steel rod of the guide, and the intermediate bearing is disposed at a lower height than the two end bearings and comes in contact with the upper steel rod of the guide. The intermediate bearing is mounted in an adjustment block vertically adjustable with respect to the bearing carriage and the end bearings are biased by elastic elements towards the lower steel rod of the guide.

### Description of the invention

A manual ceramic cutter including a tool holder and a tool holder guide system as object of this invention has characteristics intended to solve the problem set forth previously and to improve safety in movement and prevent the deformation of the guides, taking into account that during the cutting and subsequent separation of the ceramic parts, a significant force is applied to the toolholder by means of an actuation handle.

According to the invention, the manual ceramic cutter including a tool holder and a tool holder guide system is claimed as defined in claim 1.

The aforementioned steel rods allow the contact between the bearings and the guides to essentially occur on a regular basis, which allows the movement of the toolholder to be more precise by having less friction.

According to the invention, the aluminium profile forming the guides has a longitudinal cavity in which a steel bar is housed that is intended to reinforce and prevent the bending of the guides, especially those in large manual cutters.

In one embodiment of the invention, each bearing carriage disposed on opposite sides of the toolholder comprises three bearings, two end bearings and one intermediate bearing; the end bearings being aligned at the same height and the intermediate bearing being disposed at a slightly lower height, such that the end bearings come in contact with the steel rods in the upper position in the guides and the intermediate bearing comes in contact with the steel rod in the lower position in the guides; this bearing system prevents possible events that the toolholder could cause once mounted on the guides.

In addition, this arrangement of the bearing carriages prevents the toolholder from moving when a force is exerted on it, in order to then separate the cut ceramic parts.

### Description of the figures

As a complement to the description provided herein, and for the purpose of helping to make the characteristics of the invention more readily understandable, the present specification is accompanied by a set of drawings, which, by way of illustration and not limitation, represent the following:
- Figure 1 shows a partial perspective view and cross section of an exemplary embodiment of the toolholder guide system in manual ceramic cutters according to the invention.

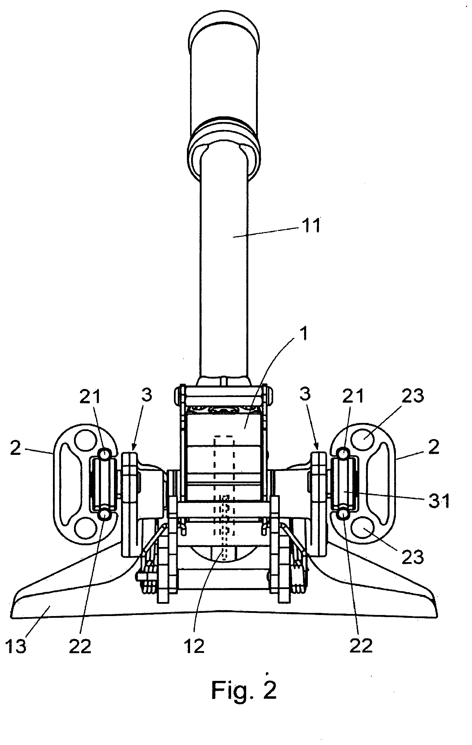

- Figure 2 shows an elevation view of the guide system of the previous figure.

### Preferred embodiment of the invention

In the embodiment shown in the attached figures, the toolholder (1) has an actuation handle (11) and, as is common in ceramic cutter machines, it carries a cutting tool (12) and a separator (13) for ceramic parts already scored with the cutting tool.

The toolholder guide system (1) comprises two parallel guides (2) formed by an aluminium profile in a general "C" shape and disposed to face each other, each of the guides (2) comprising a pair of upper and lower steel rods (21, 22), disposed longitudinally and located between wings defined by the aforementioned profile (2); said steel rods (21, 22) forming races for bearing carriages (3) mounted on the sides of the toolholder (1).

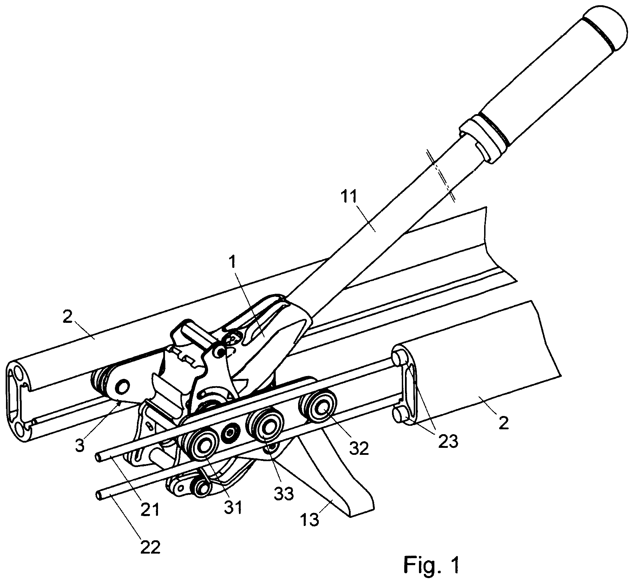

As can be observed in Figure 1, each bearing carriage (3) comprises two end bearings (31, 32) disposed at the same height and that come in contact with the upper steel rod (21) of the guide (2) corresponding to the same side, and an intermediate bearing (33) disposed at a lower height and that comes in contact with the lower steel rod (22) of the corresponding guide (2).

In the exemplary embodiment shown in the attached figures, the aluminium profile forming the guides (2) incorporates steel bars (23) in the inside thereof in order to increase the resistance to bending of the guides, especially in large cutters.

Having sufficiently described the nature of the invention, in addition to an example of a preferred embodiment, it is hereby stated for the relevant purposes that the materials, shape, size and layout of the described elements may be modified, as long as they fall into the scope defined by the claims.

## Claims

1. A manual ceramic cutter including a toolholder and a toolholder guide system, the toolholder comprising a handle (11) for the actuation thereof and carrying a cutting tool (12) for scoring a ceramic part, the toolholder guide system comprising parallel guides (2) for the longitudinal movement of the toolholder (1); wherein:
each one of the guides (2) is formed by a profile; and
the toolholder (1) comprises, at each side thereof, two end bearings (31, 32) and at least one intermediate bearing (33) which come in contact with the guide (2) corresponding to the same side;
**characterized in that**:
the end bearings (31, 32) and the intermediate bearings (33) are mounted on bearing carriages (3) disposed on the sides of the toolholder (1 );
each guide (2) comprises upper and lower steel rods (21, 22), disposed longitudinally, forming races for the bearing carriages (3);
in each bearing carriage (3), the two end bearings (31, 32) are disposed at the same height and come in contact with the upper steel rod (21) of the guide (2) corresponding to the same side, and the at least one intermediate bearing (33) is disposed at a lower height than the two end bearings (31, 32) and comes in contact with the lower steel rod (22) of the corresponding guide (2); and
the profile forming each guide (2) is made of aluminium and has at least one longitudinal cavity in which a steel bar (23) is housed that is configured to reinforce and prevent the bending of the guides.

2. The manual ceramic cutter according to claim 1, **characterized in that** the profile forming the guides (2) has an overall "C" shape, the steel rods (21, 22) being disposed between wings defined by said profile (2).

## Patentansprüche

1. Manueller Keramikschneider, der einen Werkzeughalter und ein Werkzeughalterführungssystem enthält, wobei der Werkzeughalter einen Griff (11) zu dessen Betätigung umfasst und ein Schneidwerkzeug (12) zum Ritzen eines Keramikteils trägt, wobei das Werkzeughalterführungssystem parallele Führungen (2) für die Längsbewegung des Werkzeughalters (1) umfasst; wobei:
jede der Führungen (2) durch ein Profil gebildet ist; und
der Werkzeughalter (1) n jeder Seite davon zwei Endlager (31, 32) und mindestens ein Zwischenlager (33) umfasst, die mit der Führung (2) in Kontakt gelangen, die derselben Seite entspricht;
**dadurch gekennzeichnet, dass**:
die Endlager (31, 32) und die Zwischenlager (33) an Lagerschlitten (3) montiert sind, die an den Seiten des Werkzeughalters (1) angeordnet sind;
jede Führung (2) obere und untere Stahlstangen (21, 22) umfasst, die in Längsrichtung angeordnet sind und Laufbahnen für die Lagerschlitten (3) bilden;
in jedem Lagerschlitten (3) die beiden Endlager (31, 32) auf derselben Höhe angeordnet sind und mit der oberen Stahlstange (21) der Führung (2) in Kontakt gelangen, die der derselben Seite entspricht, und das mindestens eine Zwischenlager (33) auf einer niedrigeren Höhe als die beiden Endlager (31, 32) angeordnet und mit der unteren Stahlstange (22) der entsprechenden Führung (2) in Kontakt gelangt; und
das jede Führung (2) bildende Profil aus Aluminium besteht und mindestens einen Längshohlraum aufweist, in dem eine Stahlstange (23) untergebracht ist, die so konfiguriert ist, dass sie die Führungen verstärkt und deren Verbiegen verhindert.

2. Manueller Keramikschneider nach Anspruch 1, **dadurch gekennzeichnet, dass** das die Führungen (2) bildende Profil insgesamt eine "C"-Form aufweist, wobei die Stahlstangen (21, 22) zwischen Flügeln angeordnet sind, die durch das Profil (2) definiert sind.

## Revendications

1. Coupe-céramique manuel incluant un porte-outil et un système de guidage de porte-outil, le porte-outil comprenant une poignée (11) pour l'actionnement de celui-ci et portant un outil de coupe (12) pour inciser une pièce en céramique, le système de guidage de porte-outil comprenant des guides parallèles (2) pour le déplacement longitudinal du porte-outil (1) ; dans lequel :
chacun des guides (2) est formé par un profilé ; et
le porte-outil (1) comprend, de chaque côté de celui-ci, deux paliers d'extrémité (31, 32) et au moins un palier intermédiaire (33) qui viennent en contact avec le guide (2) correspondant au même côté ;
**caractérisé en ce que** :
les paliers d'extrémité (31, 32) et les paliers intermédiaires (33) sont montés sur des chariots de palier (3) disposés sur les côtés du porte-outil (1) ;
chaque guide (2) comprend des tiges d'acier supérieure et inférieure (21, 22), disposées longitudinalement, formant des chemins de roulement pour les chariots de palier (3) ;
dans chaque chariot de palier (3), les deux paliers d'extrémité (31, 32) sont disposés à la même hauteur et viennent en contact avec la tige d'acier supérieure (21) du guide (2) correspondant au même côté, et l'au moins un palier intermédiaire (33) est disposé à une hauteur inférieure aux deux paliers d'extrémité (31, 32) et vient en contact avec la tige d'acier inférieure (22) du guide correspondant (2) ; et
le profilé formant chaque guide (2) est en aluminium et a au moins une cavité longitudinale où est logée une barre d'acier (23) qui est configurée pour renforcer et empêcher la flexion des guides.

2. Coupe-céramique manuel selon la revendication 1, **caractérisé en ce que** le profil formant les guides (2) a une forme générale en « C », les tiges d'acier (21, 22) étant disposées entre des ailes définies par ledit profil (2).
